# EUROPÄISCHE PATENTANMELDUNG

(11) **EP 4 571 514 A1**
(43) Veröffentlichungstag der Anmeldung: **18.06.2025**
(21) Anmeldenummer: 23307207.3
(22) Anmeldetag: 14.12.2023
(51) Int. Cl.: G06F 9/52, G06F 11/14, G05B 19/418

(54) **IEC-61499-TEILKOMPATIBLE RECHENVORRICHTUNG UND BETRIEBSVERFAHREN HIERFÜR**

(71) Anmelder: Schneider Electric Industries SAS, 92500 Rueil-Malmaison (FR)
(72) Erfinder: Würr, Marcus, 97837 Erlenbach (DE); Diehm, Sebastian, 97907 Hasloch (DE)
(74) Vertreter: Manitz Finsterwald Patent- und Rechtsanwaltspartnerschaft mbB

(57) **Zusammenfassung**

Eine IEC-61499-teilkompatible Rechenvorrichtung hat ein Rechenwerk, ein RAM, ein ROM, einen Betriebssystemspeicher, eine oder mehreren Schnittstellen für die Ein- und/oder Ausgabe von Daten und Signalen und einen eine oder mehrere oder alle der obigen und/oder der folgenden Komponenten verbindenden Bus. Ein Programmspeicher ist zum Speichern eines Programms ausgelegt, das einen oder mehrere funktionale Blöcke aufweist, wobei ein funktionaler Block eine oder mehrere programmierte Funktionen aufweist und eine programmierte Ausführungssteuerungskarte aufweisen kann. Eine Ausführungsvorrichtung ist zum Anlegen eines ersten Ausführungsumgebung-Datensatzes zum Konfigurieren einer Ausführungsumgebung zur Ausführung eines funktionalen Blocks eines Programms ausgelegt. Sie ist auch dazu ausgelegt, einen zweiten Ausführungsumgebungs-Datensatz anzulegen, während oder bevor ein funktionaler Block oder eine Funktion in einer Ausführungsumgebung ausgeführt wird, die durch einen zuvor von der Ausführungsvorrichtung angelegten ersten Ausführungsumgebung-Datensatz konfiguriert ist.

## Beschreibung

Die Erfindung betrifft eine IEC-61499-teilkompatible Rechenvorrichtung und ein Betriebsverfahren hierfür.

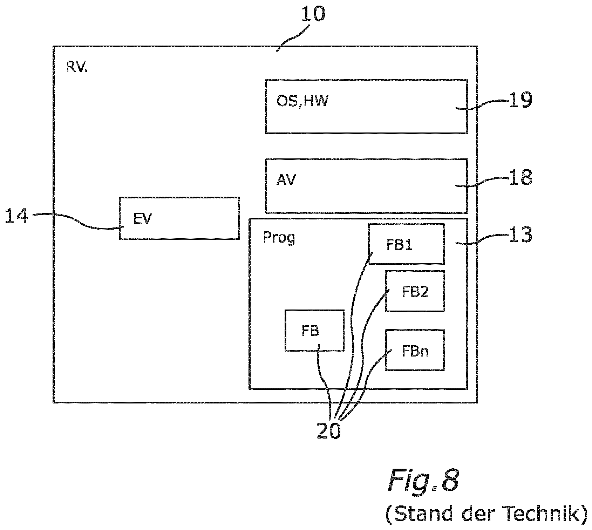

Die IEC 61499 ist eine internationale Norm für die Programmierung von Prozessmess- und -steuerungssystemen. Figur 8 zeigt schematisch den allgemeinen Aufbau einer bekannten Rechenvorrichtung gemäß IEC 61499. Die Rechenvorrichtung 10 hat allgemeine Hardware und Betriebssystem 19, die der Ausführung und der Steuerung der allgemeinen und programmspezifischen Abläufe dienen. Die konkrete Hardware ist in Figur 12 nicht weiter gezeigt, umfasst aber eine oder mehrere CPUs und/oder Kerne (Cores), RAM, ROM, insbesondere einen Programmspeicher 13, Register, einen Bus, Schnittstellen für die eingehende und ausgehende Kommunikation mit externen Komponenten wie Sensoren, Stellglieder, Netzwerke, und eine Ereignisverwaltungsvorrichtung 14.

Soweit jetzt und folgend ein Programmspeicher angesprochen ist, kann dies einerseits den nicht volatilen Speicher ansprechen, der ein Programm auch bei ausgeschaltetem Zustand der Rechenvorrichtung oder jenseits der Rechenvorrichtung oder dann speichert, wenn es nicht ausgeführt wird, oder es kann der in der Regel volatile Speicher des Programms zum Zeitpunkt der Ausführung des Programms sein, der schnell gelesen werden kann. 13 bezeichnet den Programmspeicher und das darin gespeicherte Programm

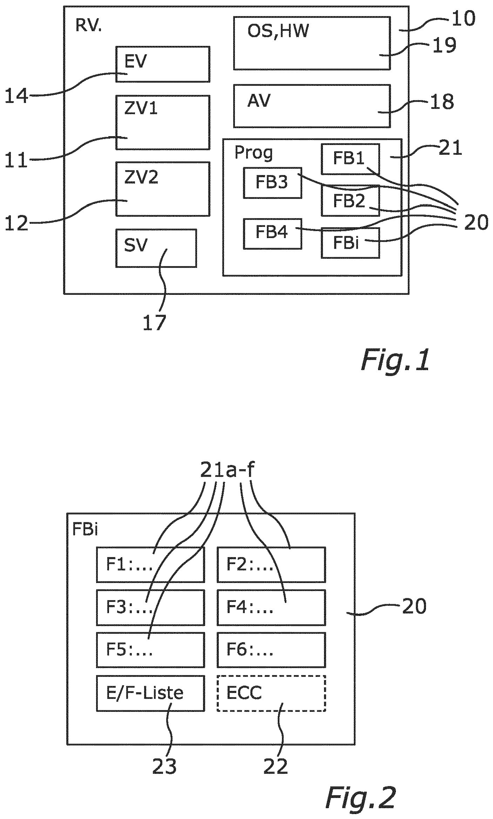

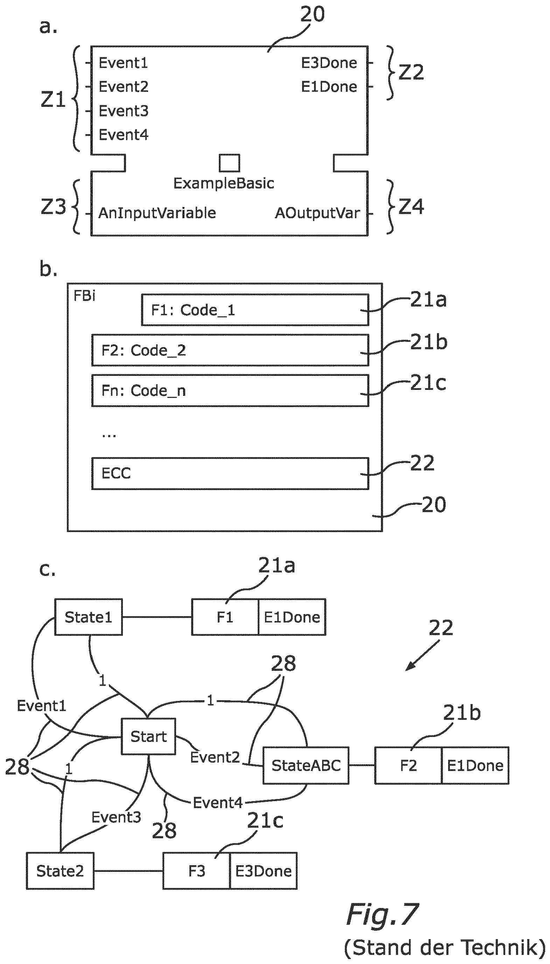

Ein Programm im Speicher 13 besteht aus einem oder mehreren funktionalen Blöcken 20 (englisch "functional blocks"), in Fig. 1 mit FB1, FB2 ... FBi symbolisiert. Ein herkömmlicher funktionaler Block 20 besteht, wie in Figur 7b schematisch dargestellt, aus mehreren programmierten Funktionen 21a bis 21n und einer Ausführungssteuerungskarte 22 (englisch: "execution control chart"), die das Zusammenwirken der Funktionen 21 steuert. Die Funktionen werden manchmal auch "Methoden" genannt.

In neueren Versionen der IEC 61499 ist der Ablauf der verschiedenen Komponenten eines Programms ereignisgesteuert, sodass die Rechenvorrichtung 10 auch eine Ereignisverwaltungsvorrichtung 14 enthält. Das Programm 13, insbesondere die funktionalen Blöcke 20 darin, und weiter insbesondere die Funktionen 21 in den funktionalen Blöcken 20, generieren Ereignisse, die ihrerseits funktionale Blöcke 20 oder bestimmte Funktionen 21 darin aufrufen. Von der Ereignisverwaltungsvorrichtung 14 werden diese Ereignisse aufgenommen und geeignet bearbeitet. Die Ereignisverwaltungsvorrichtung 14 kann Teil des Betriebssystems sein oder kann eine eigens vorgesehene Komponente sein. Sie kann softwareimplementiert sein.

Eine Rechenvorrichtung 10 weist auch eine Ausführungsvorrichtung 18 (englisch: "execution engine") auf, die dafür zuständig ist, einem auszuführenden funktionalen Block 20 bzw. einer auszuführenden Funktion 21 eine Ausführungsumgebung bereitzustellen, in der und mit der er bzw. sie ausgeführt werden kann.

Eine Ausführungsumgebung ist dabei durch einen Datensatz definiert, der wählbare und einstellbare Angaben für die zur Ausführung eines funktionalen Blocks oder einer Funktion zu setzenden Vorrichtungsparameter oder logistische Parameter macht. Es kann sich dabei um die Angabe von Speicherbereichen, von zu wählenden Hardwarekomponenten, von Prioritäten und dergleichen handeln.

In bekannten IEC-61499-kompatiblen Rechenvorrichtungen ist die Ausführungsvorrichtung 18 mit einer von ihr angelegten Ausführungsumgebung derart verbunden, dass sie einen neuen Ausführungsumgebungs-Datensatz und eine entsprechende neue Ausführungsumgebung nicht erzeugt, solange ein von ihr vorher erzeugter Ausführungsumgebungs-Datensatz für die Ausführung eines funktionalen Blocks oder einer Funktion in Verwendung ist. Erst nach Beendigung der Verwendung ist es einer bekannten Ausführungsvorrichtung 18 möglich, eine neue Ausführungsumgebung bereitzustellen, indem sie einen neuen Ausführungsumgebungs-Datensatz erzeugt. Man kann sich insoweit eine Ausführungsvorrichtung 18 (englisch: "execution engine") als zustandsbehaftet vorstellen. Solange eine von ihr definierte Ausführungsumgebung in Benutzung ist, ist ihr Zustand "belegt", und nur sonst ist ihr Zustand "frei", wobei auch noch andere Zustände möglich sind.

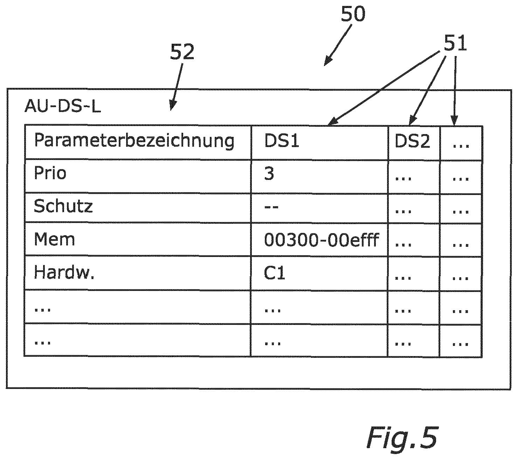

Die Merkmale der Erfindung zeigende Figur 5 zeigt schematisch für sich alleine bekannte Ausführungsumgebungs-Datensätzen DS 51. Bestimmten Größen wie etwa Priorität, Schutzmechanismen, Speicherbereich, Hardwarewahl, etc. werden bestimmte Werte zugewiesen, etwa 3, 2, 003000 bis 00efff, etc.. Diese Werte werden dann herangezogen, um eine lauffähige Ausführungsumgebung einzurichten, in der ein funktionaler Block 20 oder einer Funktion 21 ausgeführt werden kann.

Die Zuweisung eines auszuführenden funktionalen Blocks oder einer auszuführenden Funktion zu einer Ausführungsumgebung kann dabei die Ausführungsvorrichtung 18 selbst vornehmen, oder das Betriebssystem 19 kann dies vornehmen.

Die Ausführungsvorrichtung 18 kann Teil des Betriebssystems sein oder kann eine eigenständige Vorrichtung sein. Sie kann softwareimplementiert sein.

Die schon angesprochene Figur 7b zeigt den Aufbau eines funktionalen Blocks 20 gemäß IEC 61499. Er weist die schon genannten verschiedenen Funktionen 21a bis 21n auf, die in Figur 7b auch mit F1, F2, ..., Fn angedeutet sind. Hinter jeder dieser Funktionen steht eine Programmierung einer bestimmten Funktionalität, etwa ein Rechenvorgang, ein Dateneingabe oder -ausgabevorgang oder Ähnliches.

Außerdem enthält ein funktionaler Block 20 eine Ausführungssteuerungskarte 22 (Englisch: "execution control chart"), die das Ineinandergreifen und Aufeinanderfolgen der verschiedenen Funktionen des funktionalen Blocks und gegebenenfalls auch anderer funktionaler Blöcke steuert. Wie schon gesagt, sind modernere Versionen der IEC 61499 ereignisgesteuert. Die Ausführungssteuerungskarte steuert das "Innenleben" eines funktionalen Blocks. Sie definiert, welche Funktionen ausgeführt werden. Zusätzlich definiert sie die Reaktion eines funktionalen Blocks auf eingehende Ereignisse. Sie kann auch das Auslösen von ausgehenden Ereignissen durch den funktionalen Block definieren.

Letztendlich die Funktionen 21 in den funktionalen Blöcken 20 sind dazu ausgelegt, Ereignisse zu generieren, die andere Funktionen 21 im gleichen funktionalen Block 20 oder auch in einem anderen funktionalen Block 20 aufrufen. In der Ausführungssteuerungskarte 22 sind diese Verknüpfungen zwischen Ereignissen und den von ihnen aufgerufenen Funktionen 21 und/oder generierten Ausgangsereignissen visualisiert. Tatsächlich können Programmierungen der Ausführungssteuerungskarten 22 solcher funktionaler Blöcke 20 mit einer grafischen Benutzerschnittstelle GUI erfolgen, die Abbildungen wie qualitativ in Figur 7c gezeigt und dementsprechende maschinenverwertbare Ausführungssteuerungskarten 22 generieren.

Eine Eigenschaft bekannter Ausführungssteuerungskarten 22 ist es, dass sie erst dann wieder nutzbar sind, wenn keine von ihnen aufgerufene Funktion 21 mehr in Bearbeitung ist. Anders ausgedrückt kann man sich eine bekannte Ausführungssteuerungskarte 22 als zustandsbehaftet derart vorstellen, dass sie "belegt" ist, wenn eine von ihr aufgerufene Funktion 21 in Arbeit ist, und dass sie nur sonst "frei" ist.

Figur 7a zeigt die schematische Darstellung eines funktionalen Blocks 20 in seinen Verknüpfungen nach außen. Der funktionale Block 20 weist Eingangsereignisse 71 auf, was bedeutet, dass er Funktionen 21 enthält, die auf die Eingangsereignisse 71 hin auszuführen sind. Ein funktionaler Block 20 weist auch Ausgangsereignisse 72 auf. Es handelt sich dabei um Ereignisse, die von Funktionen 21 des funktionalen Blocks 20 erzeugt werden und die ihrerseits Funktionen 21 in anderen funktionalen Blöcken aufrufen können. Es sei hier darauf hingewiesen, dass Funktionen 21 in einem funktionalen Block 20 aber auch intern im eigenen funktionalen Block 20 andere Funktionen 21 aufrufen können, die also in der äußeren Einbindung eines funktionalen Blocks 20 nicht sichtbar sein müssen.

Ein funktionaler Block 20 empfängt auch gewisse Eingangsdaten 73 bzw. hat hierfür Eingabemöglichkeiten bzw. Lesemöglichkeiten. Genauso kann er Ausgangsdaten 74 erzeugen bzw. hat hierfür Ausgabemöglichkeiten bzw. Schreibmöglichkeiten. In einer vergröberten Sichtweise kann man sich die Ausführungssteuerungskarten 22 als zwischen Eingangsereignisse 23 und Ausgangsereignisse24 sitzend vorstellen, und die programmierten Funktionen 21 kann man sich als zwischen Eingangsdaten 25 und Ausgangsdaten 26 sitzend vorstellen.

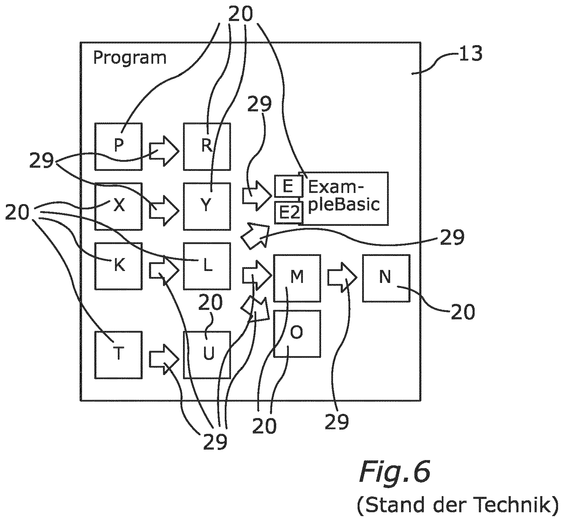

Figur 6 zeigt den Aufbau eines Programms 13 gemäß IEC 61499. Das Programm 13 kann eine Reihe von funktionalen Blöcken 20 aufweisen, die zur Unterscheidung in Figur 10 mit Großbuchstaben ab K bzw. mit "example basic" gekennzeichnet sind. Zwischen ihnen finden ereignisgesteuerte Übergänge 29 statt. Dementgegen bezeichnen die Pfeile 28 in Figur 7c ereignisgesteuerte Übergänge im Inneren eines funktionalen Blocks 20. Figur 10 zeigt, dass ein funktionaler Block 20, beispielsweise "example basic" von mehreren anderen funktionalen Blöcken 20, etwa Y und L aufgerufen werden kann. Auch kann ein einzelner funktionaler Block 20, insbesondere Funktionen 21 darin, etwa L in Figur 10, mehrere unterschiedliche Ereignisse generieren, die jeweils unterschiedliche funktionale Blöcke 20, in Figur 10 "example basic" oder M oder O, bzw. Funktionen 21 darin aufrufen.

In modernen Ausführungsvorrichtungen ist Multitasking derart möglich, dass mehrere Programme bzw. konkreter funktionale Blöcke 20 bzw. noch konkreter Funktionen 21 gleichzeitig oder quasi gleichzeitig ausführbar sind. Sie können echt gleichzeitig ausführbar sein, wenn mehrere Rechenwerke bzw. ALUs ("arithmetic logic unit") bzw. Kerne bzw. CPUs vorhanden sind. Sie können quasi gleichzeitig ausführbar sein, wenn die Verarbeitungsleistung einer konkreten Hardware im Zeitmultiplex mehreren Programmen bzw. funktionalen Blöcken bzw. Funktionen abwechselnd zugewiesen wird.

Die ereignisgesteuerte Abarbeitung eines Programms 13 einerseits und andererseits die Möglichkeit des Multitaskings führt zu zahlreichen möglichen Konstellationen des Zugriffs auf funktionale Blöcke 20 bzw. Funktionen 21. Dies kann einerseits zu unerwünschten Doppelausführungen und Zugriffs- bzw. Speicherkonflikten führen. Die oben beschriebene bekannte Zustandsbehaftetheit einerseits der Ausführungsvorrichtung 18 und andererseits der Ausführungssteuerungsvorrichtung 22 bieten dagegen einen Schutz, indem sie die Mehrfachausführung von funktionalen Blöcken und Funktionen merklich einschränken.

Andererseits führte dies dazu, dass die Rechenleistung moderner Systeme nicht ausgenutzt werden kann, weil sich Blockaden auch dann ergaben, wenn eigentlich gearbeitet werden könnte. Ein Beispiel hierfür ist eine in einer Funktion erwartete Dateneingabe, die jedoch auf sich warten lässt. Während der Wartezeit passiert nichts. Eine konventionelle Ausführungssteuerungskarte 22 und eine konventionelle Ausführungsvorrichtung 18 sind in ihrer Zustandsbehaftetheit aber blockiert und erlauben es nicht, während solcher Wartezeiten das System etwa anderweitig zu benutzen.

Die EP 4012517 A1 und die EP 4012516 A1 offenbaren Ausführungsumgebungen für eine speicherprogrammierbare Steuerung, die ereignisorientiert gesteuert sein können.

Die EP 2899633 A1 beschreibt ein ereignisorientiertes Programmierverfahren für eine programmierbare Logiksteuerung.

Die EP 3026556 A1 beschreibt die Ereignisverwaltung für eine industrielle Steuerung.

Aufgabe der Erfindung ist es, eine IEC-61499-teilkompatible Ausführungsvorrichtung sowie ein Betriebsverfahren hierfür anzugeben, die die effiziente Nutzung von Systemressourcen ermöglicht.

Diese Aufgabe wird mit den Merkmalen der unabhängigen Patentansprüche gelöst.

Eine mit der IEC-61499 teilkompatible Rechenvorrichtung hat ein Rechenwerk, ein RAM, ein ROM, einen Betriebssystemspeicher, eine oder mehreren Schnittstellen für die Ein- und/oder Ausgabe von Daten und Signalen und einen eine oder mehrere oder alle der obigen und/oder folgenden Komponenten verbindenden Bus. Sie hat einen Programmspeicher, der zum Speichern eines Programms ausgelegt ist, das einen oder mehrere funktionale Blöcke - englisch "functional blocks" - aufweist, wobei ein funktionaler Block eine oder mehrere programmierte Funktionen aufweist und eine programmierte Ausführungssteuerungskarte aufweisen kann. Sie hat eine Ausführungsvorrichtung - englisch "execution engine" -, die zum Anlegen eines ersten Ausführungsumgebung-Datensatzes zum Konfigurieren einer Ausführungsumgebung - englisch manchmal "task" genannt - zur Ausführung eines funktionalen Blocks eines Programms oder einer Funktion eines funktionalen Blocks ausgelegt ist.

Die Ausführungsvorrichtung ist dazu ausgelegt, einen zweiten Ausführungsumgebungs-Datensatz anzulegen, während oder bevor ein funktionaler Block oder eine Funktion in einer Ausführungsumgebung ausgeführt wird, die durch einen zuvor von der Ausführungsvorrichtung angelegten ersten Ausführungsumgebung-Datensatz konfiguriert ist.

Die Ausführungsvorrichtung kann dazu ausgelegt sein, entsprechend den Daten des zweiten Ausführungsumgebung-Datensatzes eine entsprechende zweite Ausführungsumgebung lauffähig einzurichten und nötigenfalls dementsprechend mit dem Betriebssystem zu kooperieren. Die Festlegung der Daten des zweiten Datensatzes und das lauffähige Einrichten der zweiten Ausführungsumgebung könne dabei ein einheitlicher und womöglich äußerlich kaum unterscheidbarer Vorgang sein. Dieser Vorgang kann stattfinden, während oder bevor ein funktionaler Block oder eine Funktion in einer ersten Ausführungsumgebung ausgeführt wird, die durch einen zuvor von der Ausführungsvorrichtung angelegten ersten Ausführungsumgebung-Datensatz konfiguriert ist.

Die Daten eines Ausführungsumgebung-Datensatzes können, müssen aber nicht nach der lauffähigen Einrichtung einer entsprechenden Ausführungsumgebung explizit gespeichert werden.

Soweit die Rechenvorrichtung hier als teilkompatibel mit der IEC 61499 angesprochen ist, kann dies bedeuten, dass sie mehrere Merkmale oder Komponenten der IEC 61499, und womöglich, aber nicht notwendigerweise alle ihre Komponenten verwendet. Es kann bedeuten, dass sie ein oder mehrere explizit oder implizit bestimmte Merkmale der IEC 61499 nicht verwendet oder abgewandelt aufweist. Es kann bedeuten, dass sie mit der IEC 61499 kompatibel ist, soweit in diesem Text nicht etwas anderes explizit oder implizit beschrieben ist oder dafür benötigt wird.

Die Ausführungsvorrichtung kann auch dahingehend ausgelegt sein, dass sie einen zweiten Ausführungsumgebungs-Datensatz anlegt, bevor er tatsächlich für die Ausführung eines funktionalen Blocks oder einer Funktion benötigt wird. Er kann sozusagen "auf Vorrat" angelegt werden und steht dann zur Verfügung, wenn er benötigt wird. Das Anlegen "auf Vorrat" hat den Vorteil, dass der aufwändige Vorgang möglichst früh vollzogen werden kann. Der Nachteil ist, dass damit Speicherverbrauch einhergeht.

Die Ausführungsvorrichtung kann auch dahingehend ausgelegt sein, dass sie einen zweiten Ausführungsumgebungs-Datensatz erst "bei Bedarf" anlegt, also wenn für die Ausführung eines weiteren funktionalen Blocks oder einer weiteren Funktion eine Ausführungsumgebung benötigt wird. Das Anlegen "bei Bedarf" hat den Nachteil, dass der aufwändige Vorgang spät vollzogen wird und möglicherweise blockierend wirkt. Der Vorteil ist, dass vorher kein Speicherverbrauch gegeben ist.

Die Ausführungsvorrichtung kann dahingehend konfigurierbar ausgelegt sein, ob sie einen oder mehrere Ausführungsumgebungs-Datensätze wie eben beschrieben auf Vorrat oder wie eben beschrieben erst bei Bedarf anlegt. Die Konfiguration kann durch einen Anwender geschehen.

Allgemein gesprochen wird also die Ausführungsvorrichtung in die Lage versetzt, nicht während der oder durch die Ausführung eines funktionalen Blocks oder einer Funktion in einer zuvor angelegten Ausführungsumgebung für die Anlage weiterer Ausführungsumgebungs-Datensätze blockiert zu sein. Diese kann auch umfassen, dass eine softwareimplementierte Ausführungsvorrichtung für die Ausführung in mehreren Instanzen ausgelegt wird, die a priori unabhängig voneinander arbeiten können, insbesondere unabhängig voneinander Ausführungsumgebungs-Datensätzen anlegen können.

In der Rechenvorrichtung kann die Ausführungsvorrichtung einen betriebsabhängigen Zustand haben. Eine erste Zustandssteuerungsvorrichtung dient dann der direkten oder indirekten Steuerung des Zustands der Ausführungsvorrichtung derart, dass diese nach dem Anlegen eines ersten Ausführungsumgebung-Datensatzes, aber vor dessen Verwendung oder vor der Beendigung dessen Verwendung einen zweiten Ausführungsumgebung-Datensatz anlegt oder anlegen kann. Letzteres kann, wie gesagt, auf Vorrat und/oder bei Bedarf geschehen.

Die Rechenvorrichtung kann eine erste Zustandssteuerungsvorrichtung zur Steuerung des Zustands der Ausführungsvorrichtung aufweisen, wobei der Zustand mindestens die zwei Werte "belegt" oder "frei" umfasst und von der ersten Zustandssteuerungsvorrichtung zwischen mindestens diesen Werten umgeschaltet wird, vorzugsweise indem ein entsprechender erster Marker von der ersten Zustandssteuerungsvorrichtung entsprechend beschrieben wird. Insbesondere ist die erste Zustandssteuerungsvorrichtung dazu ausgelegt, den Zustand der Ausführungsvorrichtung von "belegt" auf "frei" umzuschalten, unmittelbar nachdem sie einen ersten Ausführungsumgebung-Datensatz angelegt hat, oder während ein funktionaler Block in einer Ausführungsumgebung ausgeführt wird, die durch einen zuvor von der Ausführungsvorrichtung angelegten ersten Ausführungsumgebung-Datensatz konfiguriert ist.

Die beschriebene Umschaltung kann auch bedeuten, dass der Zustand einer Ausführungsvorrichtung mit einem Marker explizit angezeigt wird und dieser abgefragt wird. Die Zustandssteuerung kann dabei bedeuten, dass der Zustandsmarker selbst geeignet gesetzt wird, insbesondere auf "frei", sobald dies möglich ist, wie oben beschrieben. Die Zustandssteuerung kann auch bedeuten, dass das Abfrageergebnis eines solchen Markers in gewünschter Weise beeinflusst wird, insbesondere dahingehend, dass eine möglicherweise vorhandene Angabe "belegt" ignoriert wird oder trotzdem als "frei" gewertet wird.

Die Ausführungsvorrichtung und/oder die erste Zustandssteuerungsvorrichtung können softwareimplementiert sein und/oder können ein Teil des Betriebssystems oder eine davon unabhängige Komponente sein. Softwareimplementiert kann die Software der Ausführungsvorrichtung und/oder der ersten Zustandssteuerungsvorrichtung mit dem auszuführenden Programm geliefert werden.

Die Ausführungsvorrichtung kann dazu ausgelegt sein, für einen Ausführungsumgebung-Datensatz einen oder mehrere der folgenden Parameter festzulegen:
- einen oder mehrere Speicherbereiche,
- eine Prioritätsangabe betreffend einen in der Ausführungsumgebung auszuführenden funktionalen Block,
- ein für die Ausführung des funktionalen Blocks zu verwendendes Rechenwerk oder ein Rechenwerktyp,
- eine Identifizierung des Ausführungsumgebung-Datensatzes.

Ein Ausführungsumgebungs-Datensatz enthält also verschiedene Konfigurationsangaben, die bei der Ausführung eines funktionalen Blocks oder einer Funktion verwendet werden, um die Rechenvorrichtung und die Abläufe darin für die Ausführung wie gewünscht zu konfigurieren. Ein Ausführungsumgebungs-Datensatz kann vor der Ausführung einer Funktion oder eines funktionalen Blocks gelesen werden. Die dabei gelesenen Angaben und Werte können dann eingestellt werden und so für die Ausführung eines funktionalen Blocks oder einer Funktion verwendet werden.

Die Ausführungsvorrichtung kann dazu ausgelegt sein, einen oder mehrere Ausführungsumgebung-Datensätze vom Betriebssystem aufrufbar und zur Ausführung eines funktionalen Blocks verwendbar einzurichten, insbesondere abzuspeichern, beispielsweise als Tabelle, und/oder kann dazu ausgelegt sein, einen oder mehrere Ausführungsumgebungen entsprechend den Datensätzen lauffähig bzw. verwendbar einzurichten.

Die Zuordnung einer auszuführenden Funktion oder eines auszuführenden funktionalen Blocks zu einer Ausführungsumgebung kann das Betriebssystem vornehmen. Das Betriebssystem kann auch die Einstellung der Rechenvorrichtung nach Maßgabe der Werte im Ausführungsumgebungs-Datensatz vornehmen. Es ist aber auch möglich, diese Maßnahmen von eigenen Komponenten jenseits des Betriebssystems vornehmen zu lassen. Diese eigenen Komponenten können softwareimplementiert sein und können unabhängig vom Betriebssystem vorgesehen sein.

In einem Betriebsverfahren in einer IEC-61499-teilkompatible Rechenvorrichtung legt eine Ausführungsvorrichtung einen zweiten Ausführungsumgebungs-Datensatz, während ein funktionaler Block in einer Ausführungsumgebung ausgeführt wird, die durch einen zuvor von der Ausführungsvorrichtung angelegten ersten Ausführungsumgebung-Datensatz konfiguriert ist.

In einem solchen Betriebsverfahren ist also die Ausführungsvorrichtung nicht für die Dauer der Ausführung eines momentan laufenden funktionalen Blocks oder einer laufenden Funktion blockiert, sondern kann weiter arbeiten, insbesondere eben einen weiteren Ausführungsumgebungs-Datensatz anlegen.

Eine IEC-61499-teilkompatible Rechenvorrichtung kann wie oben ausgelegt sein. Sie kann mit einem Rechenwerk, einem RAM, einem ROM, einem Betriebssystemspeicher, einer oder mehreren Schnittstellen für die Ein- und/oder Ausgabe von Daten und Signalen und einem eine oder mehrere oder alle der obigen und/oder der folgenden Komponenten verbindenden Bus ausgestattet sein und mit einem Programmspeicher, der zum Speichern eines Programms während seiner Ausführung ausgelegt ist, wobei das Programm einen oder mehrere funktionale Blöcke aufweist, wobei ein funktionaler Block eine oder mehrere programmierte, einzeln ausführbare Funktionen aufweist, die Ereignisse erzeugen können.

Ein Speicher, insbesondere der Programmspeicher, ist dazu ausgelegt, mit einem und für einen funktionalen Block eine zur Programmierung des funktionalen Blocks gehörende Ereignis-Funktionen-Zuordnungsliste von einer oder mehreren Ereignis-Funktionen-Zuordnungen zu speichern, die jeweils einem in der Rechenvorrichtung auftretenden bestimmten Ereignis eine oder mehrere auf dieses Ereignis hin in der Rechenvorrichtung auszuführende Funktionen eines funktionalen Blocks zuordnen. Die Rechenvorrichtung, insbesondere eine Ereignissteuerungsvorrichtung derselben, ist dazu ausgelegt, auf ein bestimmtes Ereignis hin einen bestimmten funktionalen Block und/oder eine bestimmte Funktion darin nach Maßgabe eines Eintrags in der Ereignis-Funktionen-Zuordnung zur Ausführung zu bringen

Bei diesem Aspekt der Erfindung ist es möglich, statt der zustandsbehafteten Ausführungssteuerungskarte eines funktionalen Blocks die genannte zustandsfreie Ereignis-Funktionen-Zuordnung zu verwenden, sodass insbesondere eingehende Ereignisse auch dann abgearbeitet werden können, wenn gerade eine andere Funktion abgearbeitet wird.

Das in einer Ereignis-Funktionen-Zuordnung genannte Ereignis kann ein in dem funktionalen Block, der die Ereignis-Funktionen-Zuordnungen enthält, auftretendes Ereignis oder ein in einem anderen funktionalen Block auftretendes Ereignis sein. Die in einer Ereignis-Funktionen-Zuordnung genannte Funktion kann eine in dem funktionalen Block, der die Ereignis-Funktionen-Zuordnungen enthält, programmierte Funktion oder ein in einem anderen funktionalen Block programmierte Funktion sein.

Eine Ereignis-Funktionen-Zuordnungsliste kann listenartig oder tabellenartig angelegt sein mit je einer Spalte für Ereignisse und für zugeordnete Funktionen. Das Ereignis einer Ereignis-Funktionen-Zuordnung kann eine im Programm 13 eindeutige Ereignisidentifizierung und optional auch eine Prioritätsangabe für das Ereignis und optional auch eine im Programm eindeutige Identifizierung des funktionalen Blocks aufweisen, der die Ereignis-Funktionen-Zuordnung mit dem Ereignisses enthält. Die Funktion einer Ereignis-Funktionen-Zuordnung kann eine im Programm eindeutige Funktionenidentifizierung und optional auch eine Prioritätsangabe für die Funktion und optional auch eine im Programm eindeutige Identifizierung des funktionalen Blocks aufweisen, der die Funktion enthält.

Die Ereignissteuerungsvorrichtung kann softwareimplementiert und Teil des Betriebssystems sein. Die Ereignissteuerungsvorrichtung kann dazu ausgelegt sein, ein von einer ausgeführten Funktion generiertes Ereignis zu registrieren und in Abhängigkeit davon und ggf. weiterer Betriebsparameter eine Funktion eines funktionalen Blocks zur Ausführung zu bringen.

Der Programmspeicher kann dazu ausgelegt sein, für einen funktionalen Block neben der Ereignis-Funktionen-Zuordnungsliste auch eine programmierte Ausführungssteuerungskarte zu speichern, wobei dann die Rechenvorrichtung dazu ausgelegt ist, den funktionalen Block bzw. Funktionen desselben nach Maßgabe der Ausführungssteuerungskarte abzuarbeiten.

Es ist somit denkbar, eine herkömmliche Ausführungssteuerungskarte neben der beschriebenen Ereignis-Funktionen-Zuordnung zu verwenden. Beispielsweise können bestimmte Ereignisse in der herkömmlichen Ausführungssteuerungskarte hinterlegt sein, während andere Ereignisse in der beschriebenen Ereignis-Funktionen-Zuordnung erfasst sein können.

Ein Programmspeicher weist ein Programm für eine mit der IEC-61499 teilkompatible Rechenvorrichtung auf, das einen oder mehrere funktionale Blöcke aufweist, wobei ein funktionaler Block eine oder mehrere programmierte, einzeln ausführbare Funktionen aufweist, die Ereignisse erzeugen können. Der Programmspeicher weist mindestens einen Speicherbereich auf, der für einen funktionalen Block eine programmierte Ereignis-Funktionen-Zuordnungsliste von einer oder mehreren Ereignis-Funktionen-Zuordnungen speichert, die jeweils einem in dem gespeicherten Programm erzeugten bestimmten Ereignis eine auf dieses Ereignis hin in der Rechenvorrichtung auszuführende Funktion eines funktionalen Blocks zuordnen.

Der Programmspeicher kann für das Ereignis einer Ereignis-Funktionen-Zuordnung eine im Programm eindeutige Ereignisidentifizierung und optional auch eine Prioritätsangabe für das Ereignis und optional auch eine im Programm eindeutige Identifizierung des funktionalen Blocks aufweisen, der die Ereignis-Funktionen-Zuordnung mit dem Ereignisses enthält, und/oder er kann für die Funktion einer Ereignis-Funktionen-Zuordnung eine im Programm eindeutige Funktionenidentifizierung und optional auch eine Prioritätsangabe für die Funktion und optional auch eine im Programm eindeutige Identifizierung des funktionalen Blocks aufweist, der die Funktion enthält.

Ein Betriebsverfahren in einer IEC-61499-teilkompatible Rechenvorrichtung kann wie oben schon angesprochen gestaltet sein. Der Aufruf von Funktionen eines funktionalen Blocks erfolgt auf Ereignisse hin nach Maßgabe einer programmierten Ereignis-Funktionen-Zuordnungliste von einer oder mehreren Zuordnungen zwischen Ereignissen und daraufhin auszuführenden Funktionen.

Es wird hier also nicht notwendigerweise eine herkömmliche zustandsbehaftete Ausführungssteuerungskarte verwendet. Vielmehr wird die Ereignis-Funktionen-Zuordnung zustandsfrei geführt und steht jederzeit auf ein auftretendes Ereignis hin zur Verfügung.

Eine IEC-61499-teilkompatible Rechenvorrichtung, die wie oben beschrieben ausgelegt sein kann, hat ein Rechenwerk, ein RAM, ein ROM, einen Betriebssystemspeicher, eine oder mehreren Schnittstellen für die Ein- und/oder Ausgabe von Daten und Signalen und einen eine oder mehrere oder alle der obigen und/oder der folgenden Komponenten verbindenden Bus.

Sie hat einen Programmspeicher, der zum Speichern eines Programms ausgelegt ist, das einen oder mehrere funktionale Blöcke aufweist, wobei ein funktionaler Block eine oder mehrere programmierte Funktionen und eine programmierte Ausführungssteuerungskarte aufweist.

Sie weist eine zweite Zustandssteuerungsvorrichtung zur Steuerung des Zustands einer Ausführungssteuerungskarte - englisch "execution control chart ECC" - eines ausgeführten funktionalen Blocks eines Programms auf. Der Zustand weist mindestens die zwei Werte "belegt" oder "frei" auf und wird von der zweiten Zustandssteuerungsvorrichtung zwischen mindestens diesen Werten umgeschaltet, vorzugsweise indem ein entsprechender zweiter Marker von der zweiten Zustandssteuerungsvorrichtung entsprechend beschrieben wird. Die zweite Zustandssteuerungsvorrichtung ist dazu ausgelegt, den Zustand einer Ausführungssteuerungskarte von "belegt" auf "frei" umzuschalten, während oder bevor eine von der Ausführungssteuerungskarte zuvor aufgerufene Funktion ausgeführt wird.

Die zweite Zustandssteuerungsvorrichtung kann softwareimplementiert sein und kann Teil des Betriebssystems oder Teil der Programmierung eines funktionalen Blocks sein.

Ein Betriebsverfahren in einer IEC-61499-teilkompatible Rechenvorrichtung kann wie oben beschrieben gestaltet sein. Es erfolgt eine Zustandssteuerung einer Ausführungssteuerungskarte zwischen mindestens den Werten "belegt" auf "frei" derart, dass der Zustand einer Ausführungssteuerungskarte von "belegt" auf "frei" umgeschaltet wird, während oder bevor eine von der Ausführungssteuerungskarte aufgerufene Funktion ausgeführt wird.

Bei diesem Aspekt der Erfindung wird die Zustandsbehaftetheit der Ausführungssteuerungskarte dahingehend abgewandelt, dass eine Blockade der Ausführungssteuerungskarte durch eine laufende Funktion weitestmöglich vermieden wird, indem ihr Zustand schneller früher als bisher von einem blockierten Zustand auf einen verwendbaren Zustand umgeschrieben wird. So wird es beispielsweise möglich, bei einer "hängenden", etwa auf eine Eingabe wartenden Funktion die Ausführung anderer Funktionen anzustoßen, da der Zustand der Ausführungssteuerungskarte früh wieder auf "frei" umgeschrieben wurde.

In einer Rechenvorrichtung wie vorstehend beschrieben kann das Betriebssystem oder eine andere, vorzugsweise softwareimplementierte Komponente dazu ausgelegt sein, einen auszuführenden funktionalen Block oder eine auszuführende Funktion in einer Ausführungsumgebung zur Ausführung zu bringen, die mit einem von der Ausführungsvorrichtung angelegten Ausführungsumgebung-Datensatz konfiguriert ist.

Eine Rechenvorrichtung wie vorstehend beschrieben kann eine Ereignisverwaltungsvorrichtung aufweisen, die softwareimplementiert und/oder Teil des Betriebssystems sein kann und dazu ausgelegt ist, von Funktionen erzeugte Ereignisse zu erfassen, wobei solche Ereignisse die Angabe einer auszuführenden Funktion und/oder eines auszuführenden funktionalen Blocks aufweisen und eine Prioritätsangabe für die auszuführenden Funktion und/oder den auszuführenden funktionalen Block aufweisen können.

Die Ereignisverwaltungsvorrichtung kann dazu ausgelegt sein, die in dem erfassten Ereignis angegebene Funktion oder den angegebenen funktionalen Block zur Ausführung einer Ausführungsumgebung zuzuweisen, die mit einem von der Ausführungsvorrichtung angelegten Ausführungsumgebung-Datensatz konfiguriert ist, oder die angegebene Funktion oder den angegebenen funktionalen Block in eine Warteschlange einzutragen, wenn keine Ausführungsumgebung verfügbar ist.

Die Ereignisverwaltungsvorrichtung kann dazu ausgelegt sein, beispielsweise beim Programmstart Ereignis-Funktionen-Zuordnungen von einer oder mehreren Ereignis-Funktionen-Zuordnungen eines oder mehrerer funktionaler Blöcke zu sammeln und die Zuweisung einer Funktion oder eines funktionalen Blocks zu einer Ausführungsumgebung nach Maßgabe der gesammelten Listen vorzunehmen.

Die eingangs beschriebenen bekannten Auslegungen der Ausführungsvorrichtung und der Ausführungssteuerungskarte bildeten in gewisser Weise einen Schutz vor unerwünschten Doppelausführungen von funktionalen Blöcken oder Funktionen darin bzw. vor Datenzugriffskonflikten oder Datenspeicherkonflikten, indem Doppelausführungen weitgehend vermieden waren. Solche Schutzmechanismen sind aber nicht immer nötig, da es Programme gibt, die wegen ihrer Anlage oder wegen der Struktur der von ihnen gesteuerten Realität unempfindlich gegenüber den genannten Problemen sind. Für sie stellen die obigen Abwandlungen eine Verbesserung dar, da unnötige Wartezeiten vermieden werden und somit Durchsatz und Ausführungseffizienz steigen.

Es können aber auch Programme ausführbar sein, die gegen unerwünschte Doppelausführungen oder Lese- oder Schreibkonflikte geschützt werden müssen. Hierfür können eine oder mehrere Schutzvorrichtungen vorgesehen sein.

Eine Rechenvorrichtung wie vorstehend beschrieben kann eine einstellbare Schutzvorrichtung zum Blockieren der Ausführung einer Funktion oder eines funktionalen Blocks und/oder zum Schützen eines Ablaufs, insbesondere eines Funktionsaufrufs oder einer Funktion oder eines funktionalen Blocks, vor Unterbrechung aufweisen. Sie kann dazu ausgelegt sein, Schutzeinstellungen der Programmierung eines funktionalen Blocks oder einer Funktion zu entnehmen und dementsprechend zu arbeiten und/oder entsprechend von Angaben aus einer ausgeführten Funktion oder einem ausgeführten funktionalen Block zu arbeiten.

Im Betrieb kann eine Schutzvorrichtung durch Zusammenwirken einer geeignet arbeitenden Schutzeinrichtung mit dafür vorgesehenen Einstellangaben implementiert sein. Die Schutzeinrichtung kann softwareimplementiert sein und kann Teil des Betriebssystems sein oder kann ein eigenständiges Programm sein oder kann mit dem auszuführenden Programm geliefert werden oder Teil davon sein. Die Einstellangaben können dem auszuführenden Programm entnehmbar sein oder können sich aus anderen Systemeinstellungen o der -zuständen ergeben. Zusammen stellen Schutzeinrichtung und die Einstellangaben das Setzen, Beachten und Rücksetzen eines Schutzes sicher.

Eine Rechenvorrichtung kann als Schutzvorrichtung eine erste Schutzvorrichtung zum Schützen einer Funktion oder eines funktionalen Blocks vor Doppelausführung aufweisen. Die Schutzvorrichtung kann ein Mutex oder ein Semaphor aufweisen, das bei einer ersten Ausführung der zu schützenden Funktion oder des zu schützenden funktionalen Blocks gesetzt wird und das bei deren bzw. dessen Beendigung rückgesetzt wird. Das Programm kann hierfür gesetzte Einstellungsangaben aufweisen.

Eine Rechenvorrichtung kann als Schutzvorrichtung eine zweiten Schutzvorrichtung zum Blockieren der Ausführung einer Funktion oder eines funktionalen Blocks qaufweisen, wobei die zweite Schutzvorrichtung ein zweites Mutex oder ein zweites Semaphor aufweisen kann, das bei einer Ausführung einer anderen Funktion oder eines anderen funktionalen Blocks gesetzt wird und das bei deren bzw. dessen Beendigung rückgesetzt wird.

Eine Rechenvorrichtung kann als Schutzvorrichtung eine dritten Schutzvorrichtung zum Schützen eines Funktionsaufrufs vor Unterbrechung aufweisen, wobei die dritte Schutzvorrichtung ein drittes Mutex oder ein drittes Semaphor aufweisen kann, das bei einer Ausführung einer anderen Funktion oder eines anderen funktionalen Blocks gesetzt wird und das bei deren bzw. dessen Beendigung rückgesetzt wird.

Das geeignete Setzten und Rücksetzen von Schutzmechanismen kann dann Teil der Programmierung und Teil der Programmierarbeit eines Programmierers sein. Dementsprechend kann ein Programm mitprogrammierte Anweisungen betreffend die Schutzvorrichtungen enthalten, insbesondere Angaben darüber, wann ein Schutz zu setzen ist und wann er wieder aufgehoben werden kann. Ein Programmspeicher weist dann entsprechende Speicherbereiche mit diesen Schutzprogrammierungen bzw. Schutzanweisungen auf. Eine Rechenvorrichtung kann einen solchen Programmspeicher aufweisen. Der Programmspeicher kann der volatil während der Programmausführung beschriebene Programmspeicher sein oder ein nicht volatil beschriebener Speicher, der das Programm vorhält, wenn es nicht ausgeführt wird, womöglich auch jenseits der Ausführungsvorrichtung.

Eine Rechenvorrichtung wie vorstehend beschrieben kann zur gleichzeitigen oder quasi-gleichzeitigen Ausführung mehrerer Programme ausgelegt sein. Sie kann hierfür mehrere nebeneinander vorgesehene physisch unterschiedliche Rechenwerke oder Kerne oder CPUs oder ALUs oder Ausführungsumgebungen nützen, die teilweise gemeinsame weitere Ressourcen nützen, etwa Speicher, Register, Schnittstellen, Ausführungsumgebungen. Oder sie kann hierfür ein/e/n einzige/s/n Rechenwerk oder Kern oder CPU oder ALU oder Ausführungsumgebungen nützen, das/die/der im Timesharing bzw. Zeitmultiplex mehrere logische Rechenwerke oder Kerne oder CPUs oder ALUs oder Ausführungsumgebungen darstellt und auch dann teilweise gleiche weitere Ressourcen nützen, etwa Speicher, Register, Schnittstellen, Ausführungsumgebungen. Die beschriebenen Schutzvorrichtungen verhindern dann Zugriffs- oder Datenkonflikte.

Nachfolgend werden bezugnehmend auf die Zeichnungen Ausführungsformen der Erfindung beschrieben, es zeigen
- Figur 1: eine Rechenvorrichtung 10 mit Merkmalen der Erfindung,
- Figur 2: einen funktionalen Block mit Merkmalen der Erfindung,
- Figur 3: eine Ereignis-Funktionen-Zuordnung,
- Figur 4: einen funktionalen Block mit Merkmalen der Erfindung,
- Figur 5: eine Tabelle mit Ausführungsumgebungs-Datensätzen
- Figur 6: den bekannten Aufbau eines Programms,
- Figur 7a bis 7c: Merkmale eines funktionalen Blocks im Stand der Technik, und
- Figur 8: eine bekannte Rechenvorrichtung.

Figur 1 zeigt eine Rechenvorrichtung 10, die mit der IEC 61499 teilkompatibel ist. Sie weist allgemein benötigte Komponenten 19 auf, die das Betriebssystem und Hardwarekomponenten wie Speicher, Rechenwerk, Kommunikationsschnittstellen, Bus, Register, volatile und nicht-volatile Speicherbereiche, Energieversorgung und Ähnliches umfassen. 13 symbolisiert ein Programm bzw. den vom Programm eingenommenen Speicherbereich, was einerseits der nicht-volatile Speicher für die Programm- und Datenspeicherung im ausgeschalteten Zustand der Vorrichtung sein kann, der aber auch der volatil beschriebene Speicher während der Programmausführung sein kann.

Das Programm 13 kann zur IEC 61499 kompatibel oder wie oben beschrieben teilkompatibel sein. Es weist funktionale Blöcke 20 auf, die zur IEC 61499 kompatibel oder teilkompatibel sein können.

Wie schon dargestellt, haben neuere Versionen der IEC 61499 eine ereignisgesteuerte Ablaufssteuerung. Es ist hierfür eine Ereignisverwaltungsvorrichtung 14 vorgesehen, die die jeweils nötigen Maßnahmen trifft. Die Ereignisverwaltungsvorrichtung 14 ist in Figur 1 separat gezeichnet. Sie kann aber Teil des Betriebssystems sein. Sie kann softwareimplementierbar sein.

Auch vorgesehen ist eine Ausführungsvorrichtung 18, die dafür vorgesehen und ausgelegt ist, für einen auszuführenden funktionalen Block oder eine auszuführende Funktion eine Ausführungsumgebung zu definieren. Sie macht dies, indem sie einen geeigneten Ausführungsumgebungs-Datensatz erzeugt, der bei der Ausführung des Programms bzw. der Funktion bzw. des funktionalen Blocks zur Konfiguration der Ausführungsumgebung herangezogen werden kann. Wie schon gesagt, ist in einer Ausführungsform der Erfindung die Ausführungsvorrichtung 18 so gestaltet, dass sie einen zweiten Ausführungsumgebungs-Datensatz erzeugt während oder noch bevor ein funktionaler Block in einer Ausführungsumgebung ausgeführt wird, die durch einen zuvor von der Ausführungsvorrichtung angelegten ersten Ausführungsumgebungs-Datensatz konfiguriert ist. Dies kann durch eine erste Zustandssteuerungsvorrichtung 11 erreicht werden, die die Ausführungsvorrichtung 18 in die Lage versetzt, eben die beschriebene Anlage eines zweiten Ausführungsumgebungs-Datensatzes wie beschrieben vorzunehmen.

Die Ausführungsvorrichtung 18 kann dazu ausgelegt sein, entsprechend den Daten des zweiten Ausführungsumgebung-Datensatzes und vorzugsweise quasi gleichzeitig mit deren Ermittlung bzw. Festlegung eine entsprechende zweite Ausführungsumgebung benützbar bzw. lauffähig einzurichten.

Hierfür kann ein Zusammenwirken mit dem Betriebssystem nötig sein, um auf Betriebssystemebene die für den Betrieb nötigen Einstellungen vorzunehmen. Die Ausführungsvorrichtung 18 kann deshalb dazu ausgelegt sein, soweit nötig mit dem Betriebssystem zu kooperieren und/oder zu kommunizieren, um entsprechend den Daten des zweiten Ausführungsumgebung-Datensatzes eine entsprechende zweite Ausführungsumgebung lauffähig einzurichten.

Die Festlegung der Daten des zweiten Ausführungsumgebung-Datensatzes und das lauffähige Einrichten der zweiten Ausführungsumgebung könne dabei ein einheitlicher, kaum unterscheidbarer Vorgang sein. Dieser Vorgang kann stattfinden, während oder bevor ein funktionaler Block oder eine Funktion in einer ersten Ausführungsumgebung ausgeführt wird, die durch einen zuvor von der Ausführungsvorrichtung angelegten ersten Ausführungsumgebung-Datensatz konfiguriert ist.

Eine so eingerichtete zweite Ausführungsumgebung kann dann je nach Situation gleich für die Ausführung einer zur Abarbeitung anstehenden weiteren Funktion bzw. eines weiteren funktionalen Blocks verwendet werden. Oder sie existiert eingerichtet, aber mindestens vorläufig im Leerlauf.

Die erste Zustandssteuerungsvorrichtung 11 kann für die beschriebene Anlage eines zweiten Ausführungsumgebung-Datensatzes und/oder für das lauffähige Einrichten einer entsprechenden zweiten Ausführungsumgebung bekannte Blockiermechanismen für die Ausführungsvorrichtung 18 beeinflussen, um entsprechende Blockaden aufzuheben und/oder kann dafür Sorge tragen, dass eine softwareimplementierte Ausführungsvorrichtung 18 mehrfach ausführbar wird. Soweit ein expliziter Marker für einen Zustand einer Ausführungsvorrichtung 18 vorgesehen ist, kann die erste Zustandssteuerungsvorrichtung 11 den Marker geeignet beschreiben, insbesondere so, dass er frühzeitig einen freien bzw. verwendbaren Zustand der Ausführungsvorrichtung 18 anzeigt. Dies kann beispielsweise geschehen, sobald das Erstellen und Abspeichern bzw. Zugänglichmachen eines ersten Ausführungsumgebungs-Datensatzes beendet ist. Auf diese Weise ist es der Ausführungsvorrichtung 18 auch möglich, Ausführungsumgebungs-Datensätze anzulegen, bevor diese tatsächlich benötigt werden.

Figur 5 zeigt eine Liste 50 mehrerer Ausführungsumgebungs-Datensätze DS1, DS2, ... wie sie tabellenartig angelegt und gespeichert sein können und/oder wie sie für die Einstellung mehrerer Ausführungsumgebungen herangezogen worden sein können, mit oder ohne explizit gespeichert worden zu sein. Die Datenspalten 51 enthalten Werteinträge zu jeweiligen Parametern der Ausführungsumgebungen. Figur 5 zeigt eine Spalte 52, die die Parameter angibt. In realen Implementierungen muss diese nicht vorhanden sein. Die Liste 50 von Ausführungsumgebungs-Datensätzen 51 kann in der Rechenvorrichtung digital geführt sein und für das Betriebssystem lesbar und verwertbar vorgehalten sein, und/oder existierende Ausführungsumgebungen wurden dementsprechend eingerichtet. Gezeigt sind Ausführungsumgebungs-Datensätze 51, die Angaben zu Parametern wie Priorität, Schutzmechanismus, Speicherbereich, Hardwarezuweisung und Ähnliches aufweisen.

Die Ausführungsvorrichtung 18 kann mindestens eine Spalte 51 eines Speicherbereichs bzw. einer Tabelle 50 wie in Figur 5 gezeigt frühzeitig beschreiben, insbesondere dann, wenn ein anderer Ausführungsumgebungs-Datensatz noch in Verwendung ist oder bevor irgendeiner dieser Datensätze verwendet wird. Auf diese Weise wird eine Blockade der Rechenvorrichtung durch nicht vorhandene Ausführungsumgebungen bzw. Konfigurationsanweisungen dafür in Form der beschriebenen Datensätze 51 vermieden.

Figur 2 zeigt eine optional mit den obigen Merkmalen kombinierbare Ausführungsform eines funktionalen Blocks 20, der Teil eines Programms 13 sein kann. Er weist mehrere Funktionen 21a bis 21f auf, die jeweils einzeln programmiert sind und die gewünschten Leistungen verrichten. Die Funktionen sind einzeln nach Maßgabe von Ereignissen aufrufbar. Funktionen können auch Ereignisse generieren, die andere Funktionen aufrufen. Die von einem Ereignis aufgerufenen Funktionen können im gleichen funktionalen Block liegen oder in einem anderen funktionalen Block.

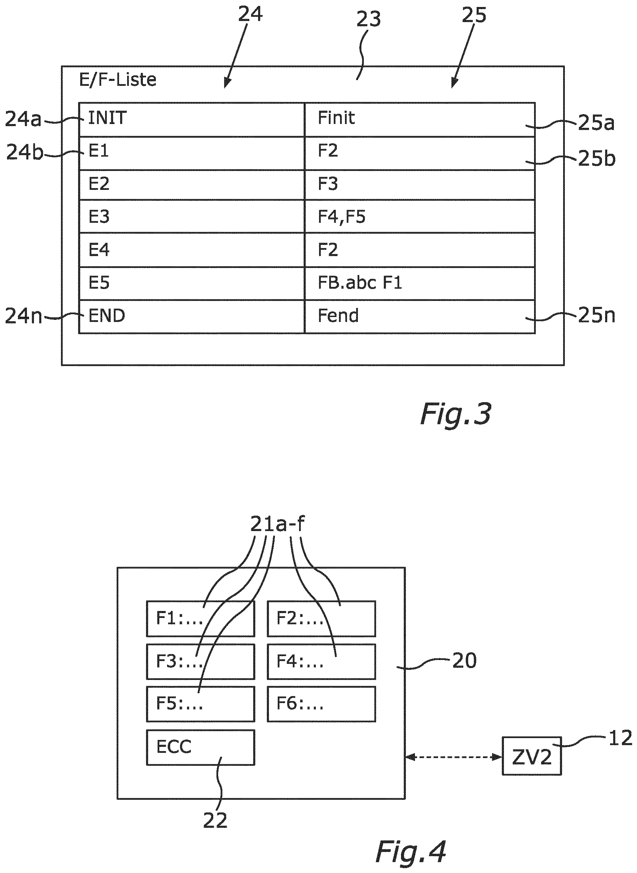

Daneben weist der funktionale Block 20 eine Ereignis-Funktionen-Zuordnungsliste 23 auf, die listenartig oder tabellenartig angelegt sein kann. Figur 3 zeigt ein Beispiel einer solchen Ereignis-Funktionen-Zuordnungsliste 23. Sie weist mindestens eine Spalte 24 für unterschiedliche Ereignisse und eine Spalte 25 für optional unterschiedliche Funktionsangaben auf. Die gelisteten Ereignisse können Standardereignisse wie Initialisierung und Beendigung ("INIT", "END") enthalten und/oder vom Programmierer gesetzte Ereignisse E1, E2, E3, E4 und E5. Die Funktionenspalte 25 kann dementsprechend Standardfunktionen für die Initialisierung oder für die Beendigung, Finit und Fend, enthalten sowie programmierte Funktionen, die ein Programmierer als Teil seiner Programmierarbeit angelegt hat. Jedem Ereignis ist eine auszuführende Funktion zugeordnet. Das Beispiel zeigt, dass unterschiedliche Ereignisse - E1 und E4 - die gleiche Funktion - F2 - aufrufen können. Die zum Ereignis E5 angegebene Funktionenangabe soll andeuten, dass es sich um eine Funktion F1 in einem anderen Block "FB.abc" handelt.

Eine Ereignis-Funktionen-Zuordnungsliste 23 wie in Figur 3 gezeigt kann beim Programmieren eines funktionalen Blocks als Teil der Programmierarbeit angelegt und zusammen mit den programmierten Funktionen gespeichert werden. Bei der Ausführung werden die programmierten Funktionen zusammen mit der programmierten Ereignis-Funktionen-Zuordnung 23 geladen.

Die Funktionen 21 können dann so programmiert werden bzw. sein, dass sie eine im gleichen funktionalen Block vorhandene Funktion aufrufen oder ein entsprechendes Ereignis erzeugen, das deren Ausführung veranlasst. Und sie können so programmiert werden bzw. sein, dass sie für eine in einem anderen funktionalen Block vorhandene Funktionen ein entsprechendes Ereignis erzeugen, das deren Ausführung veranlasst.

Die Ereigniserzeugung durch eine Funktion kann derart geschehen, dass in der Funktion eine entsprechend dem gewünschten Ereignis syntaktisch richtige Zeichenfolge erzeugt und ausgegeben wird. Sie kann auch derart geschehen, dass beispielsweise in der programmierten Ereignis-Funktionen-Zuordnung 23 entsprechend dem gewünschten Ereignis syntaktisch richtige Zeichenfolgen passiv hinterlegt sind, die dann durch eine Funktion aktiviert werden.

Wenn bei der Abarbeitung eines funktionalen Blocks, insbesondere einer Funktion desselben, ein Ereignis auftritt, kann damit auf die Ereignis-Funktionen-Zuordnung 23 zugegriffen werden, um eine dementsprechend auszuführende Funktion zu ermitteln. Diese kann dann zur Ausführung gebracht werden, sei es innerhalb des funktionalen Blocks oder nach einem Ausgangsereignis in einem anderen funktionalen Block.

Die Ereignis-Funktionen-Zuordnung 23 ist zustandsfrei und nicht in ihrer Verwendung durch irgendwelche Systemparameter blockiert. Es wird auf diese Weise vermieden, dass wegen Abarbeitungsdauern oder Wartezeiten die Abarbeitung bestimmter Ereignisse verzögert wird.

Figur 2 deutet an, dass ein funktionaler Block 20 mit einer Ereignis-Funktionen-Zuordnung 23 auch eine Ausführungssteuerungskarte 22 aufweisen kann. Die beiden Mechanismen können gegebenenfalls kombiniert miteinander vorgesehen sein.

Figur 4 zeigt einen weiteren Aspekt der Erfindung, der mit den obigen Aspekten kombiniert vorgesehen sein kann. Mit 20 ist abermals ein funktionaler Block angedeutet, der Funktionen 21a bis 21f enthält, die einzeln aufrufbar und einzeln programmiert sind, wie es bekannt ist. 22 ist eine bekannte Ausführungssteuerungskarte, die in bekannter Weise den Aufruf von Funktionen nach Maßgabe von Ereignissen bewirkt. Sie ist zustandsbehaftet wie zum Stand der Technik beschrieben.

Allerdings ist eine zweite Zustandssteuerungsvorrichtung 12 vorgesehen. Es kann sich hierbei um eine softwareimplementierte Komponente handeln, deren Programmierung innerhalb des funktionalen Blocks 20 oder außerhalb davon angelegt ist. Figur 4 deutet letzteres an. Die zweite Zustandssteuerungsvorrichtung 12 kann aber auch Teil der Programmierung eines funktionalen Blocks 20 sein oder neben und mit ihr geliefert werden.

Die zweite Zustandssteuerungsvorrichtung 12 arbeitet in der Weise, dass sie den Zustand der Ausführungssteuerungskarte 22 früh von einem Wert "belegt" auf einen Wert "frei" umschaltet. Dies geschieht vor allem bevor die Abarbeitung eine jüngst aus der Ausführungssteuerungskarte 22 heraus aufgerufene Funktion beendet oder gar begonnen ist. Es kann z.B. geschehen, sobald der Funktionenaufruf abgeschlossen ist bzw. unmittelbar nach Beginn der Ausführung der zuletzt aus der Ausführungssteuerungskarte 22 heraus aufgerufenen Funktion.

Auf diese Weise ist sichergestellt, dass die Ausführungssteuerungskarte 22 nicht wegen einer in Abarbeitung befindlichen Funktion für die weitere Verwendung, insbesondere für den Aufruf weiterer Funktionen nach Maßgabe weiterer Ereignisse, gesperrt ist.

Die zweite Zustandssteuerungsvorrichtung 12 kann dazu ausgelegt sein kann, die konventionelle Zustandsfestlegung einer bekannten Zustandssteuerungsvorrichtung abzuändern. Sie kann auch dazu ausgelegt sein, sonstige Verwendungshindernisse für die frühzeitige Wiederverwendung einer Ausführungssteuerungskarte 22 zu beseitigen. Sie kann auch dazu ausgelegt sein, eine konventionelle Zustandssteuerung zu ersetzen.

In diesem Aspekt der Erfindung kann ein Betriebsverfahren für eine IEC-61499-teilkompatible Rechenvorrichtung wie oben beschrieben ausgelegt sein. Die Ausführungssteuerungskarte kann zustandsbehaftet sein. Eine Zustandssteuerung wird dann so vorgenommen, dass der Zustand von "belegt" auf "frei" umgeschaltet wird, während oder bevor eine von der Ausführungssteuerungskarte zuvor aufgerufene Funktion ausgeführt wird.

Allgemein ist die Rechenvorrichtung dazu ausgelegt, einen auszuführenden funktionalen Block oder eine auszuführende Funktion in einer Ausführungsumgebung zur Ausführung zu bringen, die entsprechend einem von der Ausführungsvorrichtung angelegten Ausführungsumgebung-Datensatz konfiguriert ist. Das Zuweisen einer auszuführenden Funktion oder eines auszuführenden funktionalen Blocks zu einer Ausführungsumgebung kann vom Betriebssystem oder einer anderen Komponente der Rechenvorrichtung vorgenommen werden. Es kann ereignisgesteuert nach Maßgabe von Eingriffen der Ereignisverwaltungsvorrichtung 14 geschehen.

Um Zugriffskonflikte zu vermeiden, können Schutzvorrichtungen vorgesehen sein. Es kann Konstellationen geben, bei denen es unerwünscht ist, dass während der Ausführung einer Funktion eine andere Funktion ausgeführt wird, oder dass ein und dieselbe Funktion doppelt ausgeführt wird, oder dass Funktionen lesend oder Schreibend auf gleiche Daten zugreifen. Um solche Zugriffskonflikte zu vermeiden, können einstellbare Schutzvorrichtungen in der Weise vorgesehen sein, dass sie Teil der Programmierung durch einen Programmierer werden. Es können hier Semaphore oder Mutexe verwendet werden, die geeignet gesetzt und zurückgesetzt werden und die beachtet werden. Die Beachtung kann dabei insbesondere dann geschehen, wenn ein funktionaler Block oder eine Funktion einer Ausführungsumgebung zugewiesen wird, oder wenn der funktionale Block oder die Funktion bei schon vorgenommener Zuweisung ausgeführt werden sollen. Die Beachtung von Schutzmechanismen kann deshalb beispielsweise auf Betriebssystemebene erfolgen oder auf Ebene der Ereignisverwaltungsvorrichtung 14. Es kann sich hier aber auch um einen eigens angelegten Mechanismus handeln.

Ein erstes Mutex oder ein erster Semaphor kann vor Doppelausführung einer Funktion oder eines funktionalen Blocks schützen. Es kann gesetzt werden, wenn der zu schützende funktionale Block oder die zu schützende Funktion erstmals ausgeführt wird und kann rückgesetzt werden, wenn die erste Ausführung beendet ist. Während des gesetzten Zustands ist es dann nicht möglich, den so markierten funktionalen Block oder die so markierte Funktion ein zweites Mal auszuführen.

Eine Schutzvorrichtung kann auch zum Blockieren allgemein der Ausführung einer Funktion oder eines funktionalen Blocks dienen. Wie beschrieben wird dann zu Beginn der gewünschten Blockade der zu blockierende funktionale Block oder die zu blockierende Funktion mit einem Mutex oder einem Semaphor gekennzeichnet. Wenn die Blockade nicht mehr von Nöten ist, wird das Mutex oder der Semaphor zurückgesetzt.

Vor allem in prioritätsgekennzeichneten Funktionen und funktionalen Blöcken kann es außerdem wünschenswert sein, einen ausgeführten funktionalen Block oder eine ausgeführte Funktion vor Unterbrechung zu schützen. Auch insoweit kann ein Schutzmechanismus vorgesehen sein, der zu Beginn der nicht zu unterbrechenden Ausführung gesetzt und nach Beendigung dieser Ausführung rückgesetzt wird. Auch hier kann es sich um ein geeignet gestaltetes Semaphor oder Mutex handeln. Das Setzen und Rücksetzen der Schutzvorrichtungen bzw. jedenfalls die Angabe dazu, wann das Setzen und Rücksetzen zu erfolgen hat, sind Teil der Programmierung eines funktionalen Blocks und sind dann auch Teil des Programms und nehmen dementsprechend dem Programmspeicher entsprechende Bereiche ein.

Der Speicherbereich der Rechenvorrichtung, insbesondere der Programmspeicher, kann mit Daten und/oder Anweisungen und/oder Informationen zum Ausführen bzw. Implementieren eines oder mehrerer der genannten Schutzmechanismen und/oder Schutzvorrichtungen beschrieben sein.

Die Rechenvorrichtung allgemein kann für die Mehrfachausführung von Programmen und Programmteilen, insbesondere funktionalen Blöcken und Funktionen desselben, ausgelegt sein. Die parallele Ausführung kann echt gleichzeitig oder quasi gleichzeitig im Zeitmultiplex erfolgen. Die echt gleichzeitige Ausführung erfordert mindesten unterschiedliche Rechenwerke, die dann aber womöglich auf gleiche sonstige Ressourcen wie Speicher, Schnittstellen, Register oder Ähnliches zugreifen können. Bei der quasi gleichzeitigen Ausführung kann im Zeitmultiplex gearbeitet werden und Rechenleistung einer Hardware verteilt mehreren Ausführungen mehrerer Funktionen oder funktionaler Blöcke zugewiesen werden.

Die in dieser Beschreibung und den Ansprüchen beschriebenen oder in einer Abbildung dargestellten Merkmale sollen auch dann als untereinander kombinierbar gelten, wenn ihre Kombination nicht ausdrücklich beschrieben ist, soweit die Kombination technisch möglich ist. Merkmale, die in einem bestimmten Kontext, einer bestimmten Ausführungsform, Figur oder einem bestimmten Anspruch beschrieben werden, sollen auch als von diesem Anspruch, Kontext, Ausführungsform oder Figur trennbar und als mit jeder anderen Figur, Anspruch, Ausführungsform oder Kontext kombinierbar angesehen werden, soweit dies technisch möglich ist. Ausführungsformen und Figuren sollen nicht als notwendigerweise ausschließlich gegeneinander verstanden werden. Beschreibungen eines Verfahrens oder eines Ablaufs oder eines Verfahrensschrittes oder eines Ablaufschrittes sind auch als Beschreibung von Einrichtungen und/oder eventuell Programmanweisungen von ausführbarem Code auf einem Datenträger zu verstehen, die für die Implementierung des Verfahrens oder des Ablaufs oder des Verfahrensschrittes oder des Ablaufschrittes geeignet sind, und/oder sind auch als Beschreibung eines Artefakts zu verstehen, das mit dem Verfahrens oder Ablauf oder Verfahrensschritt oder Ablaufschritt erzeugt oder bearbeitet wurde, und umgekehrt. In der vorliegenden Beschreibung wird der Begriff Erfindung als die subjektiv vom Erfinder entwickelte Lehre verstanden.

### Bezugszeichenliste:

- 10: Rechenvorrichtung
- 11: erste Zustandssteuerungsvorrichtung
- 12: zweite Zustandssteuerungsvorrichtung
- 13: Programm, Programmspeicher
- 14: Ereignisverwaltungsvorrichtung
- 17: Schutzvorrichtungen
- 18: Ausführungsvorrichtung
- 19: Hardware, Betriebssystem
- 20: funktionaler Block
- 21: Funktion
- 22: Ausführungssteuerungskarte
- 23: Ereignis-Funktionen-Zuordnungsliste
- 24: Ereignisspalte
- 25: Funktionenspalte
- 28: funktionsblockinterner Übergang
- 28: Übergang zu externem Funktionsblock
- 50: Ausführungsumgebungsdatensatz-Liste
- 51: Datensatzspalte
- 71: Eingangsereignisse
- 72: Ausgangsereignisse
- 73: Eingangsdaten
- 74: Ausgangsdaten

## Patentansprüche

1. IEC-61499-teilkompatible Rechenvorrichtung mit
einem Rechenwerk, einem RAM, einem ROM, einem Betriebssystemspeicher, einer oder mehreren Schnittstellen für die Ein- und/oder Ausgabe von Daten und Signalen und einem eine oder mehrere oder alle der obigen und/oder der folgenden Komponenten verbindenden Bus,
einem Programmspeicher, der zum Speichern eines Programms ausgelegt ist, das einen oder mehrere funktionale Blöcke aufweist, wobei ein funktionaler Block eine oder mehrere programmierte Funktionen aufweist und eine programmierte Ausführungssteuerungskarte aufweisen kann,
einer Ausführungsvorrichtung, die zum Anlegen eines ersten Ausführungsumgebung-Datensatzes zum Konfigurieren einer Ausführungsumgebung zur Ausführung eines funktionalen Blocks eines Programms ausgelegt ist,
**dadurch gekennzeichnet, dass**
die Ausführungsvorrichtung dazu ausgelegt ist, einen zweiten Ausführungsumgebungs-Datensatz anzulegen, während oder bevor ein funktionaler Block oder eine Funktion in einer Ausführungsumgebung ausgeführt wird, die durch einen zuvor von der Ausführungsvorrichtung angelegten ersten Ausführungsumgebung-Datensatz konfiguriert ist.

2. Rechenvorrichtung nach Anspruch 1, bei der die Ausführungsvorrichtung dazu ausgelegt ist, zusammen mit dem Anlegen eines zweiten Ausführungsumgebungs-Datensatzes auch eine zweite Ausführungsumgebungen entsprechend den Daten des zweiten Ausführungsumgebungs-Datensatzes verwendbar oder lauffähig einzurichten.

3. Rechenvorrichtung nach Anspruch 1 oder 2,
bei der die Ausführungsvorrichtung einen betriebsabhängigen Zustand hat und bei der eine erste Zustandssteuerungsvorrichtung zur direkten oder indirekten Steuerung des Zustands der Ausführungsvorrichtung derart umfasst, dass sie nach dem Anlegen eines ersten Ausführungsumgebung-Datensatzes, aber vor dessen Verwendung oder vor der Beendigung dessen Verwendung einen zweiten Ausführungsumgebung-Datensatz anlegt oder anlegen kann.

4. Rechenvorrichtung nach einem der vorherigen Ansprüche, mit
einer ersten Zustandssteuerungsvorrichtung zur Steuerung des Zustands der Ausführungsvorrichtung, wobei der Zustand mindestens die zwei Werte "belegt" oder "frei" umfasst und von der ersten Zustandssteuerungsvorrichtung zwischen mindestens diesen Werten umgeschaltet wird, vorzugsweise indem ein entsprechender erster Marker von der ersten Zustandssteuerungsvorrichtung entsprechend beschrieben wird,
wobei die erste Zustandssteuerungsvorrichtung dazu ausgelegt ist, den Zustand der Ausführungsvorrichtung von "belegt" auf "frei" umzuschalten, unmittelbar nachdem sie einen ersten Ausführungsumgebung-Datensatz angelegt hat, oder während ein funktionaler Block in einer Ausführungsumgebung ausgeführt wird, die durch einen zuvor von der Ausführungsvorrichtung angelegten ersten Ausführungsumgebung-Datensatz konfiguriert ist.

5. Rechenvorrichtung nach einem der vorherigen Ansprüche, bei der die Ausführungsvorrichtung dazu ausgelegt ist, für einen Ausführungsumgebung-Datensatz einen oder mehrere der folgenden Parameter festzulegen:
• eine Prioritätsangabe betreffend einen in der Ausführungsumgebung auszuführenden funktionalen Block,
• ein für die Ausführung des funktionalen Blocks zu verwendendes Rechenwerk oder ein Rechenwerktyp,
• eine Identifizierung des Ausführungsumgebung-Datensatzes.

6. Rechenvorrichtung nach einem der vorherigen Ansprüche, bei der die Ausführungsvorrichtung und/oder die erste Zustandssteuerungsvorrichtung softwareimplementiert sind und ein Teil des Betriebssystems oder eine davon unabhängige Komponente sein können.

7. Rechenvorrichtung nach einem der vorherigen Ansprüche, bei der die Ausführungsvorrichtung dazu ausgelegt ist, einen Ausführungsumgebung-Datensatz anzulegen, wenn ein funktionaler Block auszuführen ist, auch dann, wenn schon ein weiterer funktionaler Block ausgeführt wird, und/oder dazu ausgelegt ist, ohne momentanen Bedarf einen oder mehrere Ausführungsumgebung-Datensätze anzulegen und diese vom Betriebssystem zur Ausführung eines funktionalen Blocks aufrufbar und ggf. wählbar einzurichten, insbesondere abzuspeichern, und/oder dazu ausgelegt ist, einen Ausführungsumgebung-Datensatz vom Betriebssystem aufrufbar und zur Ausführung eines funktionalen Blocks auswertbar einzurichten, insbesondere abzuspeichern.

8. Betriebsverfahren für eine IEC-61499-teilkompatible Rechenvorrichtung, die nach einem der vorherigen Vorrichtungsansprüche ausgelegt sein kann, bei dem eine Ausführungsvorrichtung einen zweiten Ausführungsumgebungs-Datensatz anlegt, während ein funktionaler Block in einer Ausführungsumgebung ausgeführt wird, die durch einen zuvor von der Ausführungsvorrichtung angelegten ersten Ausführungsumgebung-Datensatz konfiguriert ist.

9. IEC-61499-teilkompatible Rechenvorrichtung, die nach einem der vorherigen Ansprüche ausgelegt sein kann, mit
einem Rechenwerk, einem RAM, einem ROM, einem Betriebssystemspeicher, einer oder mehreren Schnittstellen für die Ein- und/oder Ausgabe von Daten und Signalen und einem eine oder mehrere oder alle der obigen und/oder der folgenden Komponenten verbindenden Bus,
einem Programmspeicher, der zum Speichern eines Programms während seiner Ausführung ausgelegt ist, wobei das Programm einen oder mehrere funktionale Blöcke aufweist, wobei ein funktionaler Block eine oder mehrere programmierte, einzeln ausführbare Funktionen aufweist, die Ereignisse erzeugen können,
**dadurch gekennzeichnet, dass**
ein Speicher, insbesondere der Programmspeicher, dazu ausgelegt ist, mit einem und für einen funktionalen Block eine der Programmierung des funktionalen Blocks entnommene Ereignis-Funktionen-Zuordnungsliste von einer oder mehreren Ereignis-Funktionen-Zuordnungen zu speichern, die jeweils einem in der Rechenvorrichtung auftretenden bestimmten Ereignis eine auf dieses Ereignis hin in der Rechenvorrichtung auszuführende Funktion eines funktionalen Blocks zuordnen, und
die Rechenvorrichtung, insbesondere eine Ereignissteuerungsvorrichtung derselben, dazu ausgelegt ist, auf ein bestimmtes Ereignis hin einen bestimmten funktionalen Block und/oder eine bestimmte Funktion darin nach Maßgabe eines Eintrags in der Ereignis-Funktionen-Zuordnung zur Ausführung zu bringen,
wobei die Ereignissteuerungsvorrichtung softwareimplementiert und Teil des Betriebssystems sein kann und dazu ausgelegt sein kann, ein von einer ausgeführten Funktion generiertes Ereignis zu registrieren und in Abhängigkeit davon und weiterer Betriebsparameter eine Funktion eines funktionalen Blocks zur Ausführung zu bringen.

10. Rechenvorrichtung nach Anspruch 9, bei der das in einer Ereignis-Funktionen-Zuordnung genannte Ereignis ein in dem funktionalen Block, der die Ereignis-Funktionen-Zuordnungen enthält, auftretendes Ereignis oder ein in einem anderen funktionalen Block auftretendes Ereignis ist, und/oder bei der die in einer Ereignis-Funktionen-Zuordnung genannte Funktion eine in dem funktionalen Block, der die Ereignis-Funktionen-Zuordnungen enthält, programmierte Funktion oder eine in einem anderen funktionalen Block programmierte Funktion ist.

11. Rechenvorrichtung nach Anspruch 9 oder 10, bei der das Ereignis einer Ereignis-Funktionen-Zuordnung eine im Programm eindeutige Ereignisidentifizierung und optional auch eine Prioritätsangabe für das Ereignis und optional auch eine im Programm eindeutige Identifizierung des funktionalen Blocks aufweist, der die Ereignis-Funktionen-Zuordnung mit dem Ereignisses enthält, und/oder bei der die Funktion einer Ereignis-Funktionen-Zuordnung eine im Programm eindeutige Funktionenidentifizierung und optional auch eine Prioritätsangabe für die Funktion und optional auch eine im Programm eindeutige Identifizierung des funktionalen Blocks aufweist, der die Funktion enthält.

12. Rechenvorrichtung nach einem der Ansprüche 9 bis 11, bei der die Ereignissteuerungsvorrichtung ein von einer ausgeführten Funktion generiertes Ereignis registriert und in Abhängigkeit davon und weiterer Betriebsparameter eine Funktion eines funktionalen Blocks zur Ausführung bringt.

13. Rechenvorrichtung nach einem der Ansprüche 9 bis 12, bei der der Programmspeicher dazu ausgelegt ist, für einen funktionalen Block auch eine programmierte Ausführungssteuerungskarte zu speichern, wobei die Rechenvorrichtung dazu ausgelegt ist, den funktionalen Block bzw. Funktionen desselben nach Maßgabe der Ausführungssteuerungskarte abzuarbeiten.

14. Programmspeicher, der ein Programm für eine mit der IEC-61499 teilkompatible Rechenvorrichtung aufweist, wobei das Programm einen oder mehrere funktionale Blöcke aufweist, wobei ein funktionaler Block eine oder mehrere programmierte, einzeln ausführbare Funktionen aufweist, die Ereignisse erzeugen können, wobei der Programmspeicher mindestens einen Speicherbereich aufweist, der für einen funktionalen Block eine programmierte Ereignis-Funktionen-Zuordnung von einer oder mehreren Ereignis-Funktionen-Zuordnungen speichert, die jeweils einem in dem gespeicherten Programm erzeugten bestimmten Ereignis eine auf dieses Ereignis hin in der Rechenvorrichtung auszuführende Funktion eines funktionalen Blocks zuordnen,
wobei das gespeicherte Ereignis einer gespeicherten Ereignis-Funktionen-Zuordnung eine im Programm eindeutige Ereignisidentifizierung und optional auch eine Prioritätsangabe für das Ereignis und optional auch eine im Programm eindeutige Identifizierung des funktionalen Blocks aufweisen kann, der die Ereignis-Funktionen-Zuordnung mit dem Ereignisses enthält, und/oder bei der die gespeicherte Funktion einer gespeicherten Ereignis-Funktionen-Zuordnung eine im Programm eindeutige Funktionenidentifizierung und optional auch eine Prioritätsangabe für die Funktion und optional auch eine im Programm eindeutige Identifizierung des funktionalen Blocks aufweist, der die Funktion aufweisen kann.

15. Betriebsverfahren für eine IEC-61499-teilkompatible Rechenvorrichtung, die nach einem der vorherigen Vorrichtungsansprüche ausgelegt sein kann, wobei das Verfahren nach Anspruch 8 ausgelegt sein kann, und bei dem eine der Programmierung eines funktionalen Blocks entnommene Ereignis-Funktionen-Zuordnung geladen wird und auf ein bestimmtes Ereignis hin ein bestimmter funktionalen Block und/oder eine bestimmte Funktion darin nach Maßgabe eines Eintrags in der Ereignis-Funktionen-Zuordnung ausgeführt wird.

16. IEC-61499-teilkompatible Rechenvorrichtung, die nach einem der vorherigen Ansprüche ausgelegt sein kann, mit
einem Rechenwerk, einem RAM, einem ROM, einem Betriebssystemspeicher, einer oder mehreren Schnittstellen für die Ein- und/oder Ausgabe von Daten und Signalen und einem eine oder mehrere oder alle der obigen und/oder der folgenden Komponenten verbindenden Bus,
einem Programmspeicher, der zum Speichern eines Programms ausgelegt ist, das einen oder mehrere funktionale Blöcke aufweist, wobei ein funktionaler Block eine oder mehrere programmierte Funktionen und eine programmierte Ausführungssteuerungskarte aufweist,
eine zweite Zustandssteuerungsvorrichtung zur Steuerung des Zustands einer Ausführungssteuerungskarte eines ausgeführten funktionalen Blocks eines Programms, wobei der Zustand mindestens die zwei Werte "belegt" oder "frei" umfasst und von der zweiten Zustandssteuerungsvorrichtung zwischen mindestens diesen Werten umgeschaltet wird, vorzugsweise indem ein entsprechender zweiter Marker von der Zustandssteuerungsvorrichtung entsprechend beschrieben wird,
**dadurch gekennzeichnet, dass**
die zweite Zustandssteuerungsvorrichtung dazu ausgelegt ist, den Zustand einer Ausführungssteuerungskarte von "belegt" auf "frei" umzuschalten, während oder bevor eine von der Ausführungssteuerungskarte aufgerufene Funktion ausgeführt wird.

17. Rechenvorrichtung nach Anspruch 16, bei der die zweite Zustandssteuerungsvorrichtung dazu ausgelegt sein kann, die Zustandsfestlegung einer bekannten Zustandssteuerungsvorrichtung abzuändern, wobei die zweite Zustandssteuerungsvorrichtung softwareimplementiert und Teil der Programmierung eines funktionalen Blocks sein kann.

18. Betriebsverfahren für eine IEC-61499-teilkompatible Rechenvorrichtung, die nach einem der vorherigen Vorrichtungsansprüche ausgelegt sein kann, wobei das Verfahren nach Anspruch 8 oder 15 ausgelegt sein kann, und bei dem der Zustand einer Ausführungssteuerungskarte mindestens die zwei Werte "belegt" oder "frei" annehmen kann und der Zustand der Ausführungssteuerungskarte von "belegt" auf "frei" umgeschaltet wird, während oder bevor eine von der Ausführungssteuerungskarte aufgerufene Funktion ausgeführt wird.

19. Rechenvorrichtung nach einem der vorherigen Ansprüche, bei der das Betriebssystem dazu ausgelegt ist, einen auszuführenden funktionalen Block oder eine auszuführende Funktion in einer Ausführungsumgebung zur Ausführung zu bringen, die mit einem von der Ausführungsvorrichtung angelegten Ausführungsumgebung-Datensatz konfiguriert ist.

20. Rechenvorrichtung nach einem der vorherigen Ansprüche, mit einer Ereignisverwaltungsvorrichtung (14), die Teil des Betriebssystems sein kann und/oder die softwareimplementiert sein kann und die dazu ausgelegt ist,
von Funktionen erzeugte Ereignisse zu erfassen, wobei solche Ereignisse die Angabe einer auszuführenden Funktion und/oder eines auszuführenden funktionalen Blocks aufweisen und eine Prioritätsangabe für die auszuführenden Funktion und/oder den auszuführenden funktionalen Block aufweisen können, und/oder
die in dem erfassten Ereignis angegebene Funktion oder den angegebenen funktionalen Block zur Ausführung einer Ausführungsumgebung zuzuweisen, die mit einem von der Ausführungsvorrichtung angelegten Ausführungsumgebung-Datensatz konfiguriert ist, oder die angegebene Funktion oder den angegebenen funktionalen Block in eine Warteschlange einzutragen, wenn keine Ausführungsumgebung verfügbar ist, und/oder
Ereignis-Funktionen-Zuordnungen von einer oder mehreren Ereignis-Funktionen-Zuordnungen eines oder mehrerer funktionaler Blöcke zu sammeln und die Zuweisung einer Funktion oder eines funktionalen Blocks zu einer Ausführungsumgebung nach Maßgabe der gesammelten Listen vorzunehmen.

21. Rechenvorrichtung nach einem der vorherigen Ansprüche, mit einer programmierbaren Schutzvorrichtung zum Blockieren der Ausführung einer Funktion oder eines funktionalen Blocks und/oder zum Schützen eines Ablaufs, insbesondere eines Funktionsaufrufs oder einer Funktion oder eines funktionalen Blocks, vor Unterbrechung, wobei die programmierbare Schutzvorrichtung dazu ausgelegt sein kann, ihre Programmierung der Programmierung eines funktionalen Blocks oder einer Funktion zu entnehmen und dementsprechend zu arbeiten und/oder entsprechend von Angaben aus einer ausgeführten Funktion oder einem ausgeführten funktionalen Block zu arbeiten, wobei die programmierbare Schutzvorrichtung vom Betriebssystem implementiert sein kann, wobei die Rechenvorrichtung
einer ersten Schutzvorrichtung aufweisen kann zum Schützen einer Funktion oder eines funktionalen Blocks vor Doppelausführung, wobei die Schutzvorrichtung ein erstes Mutex oder ein erstes Semaphor aufweisen kann, das bei einer ersten Ausführung der zu schützenden Funktion oder des zu schützenden funktionalen Blocks gesetzt wird und das bei deren bzw. dessen Beendigung rückgesetzt wird.
und/oder eine zweiten Schutzvorrichtung aufweisen kann zum Blockieren der Ausführung einer Funktion oder eines funktionalen Blocks, wobei die zweite Schutzvorrichtung ein zweites Mutex oder ein zweites Semaphor aufweisen kann, das bei einer Ausführung einer anderen Funktion oder eines anderen funktionalen Blocks gesetzt wird und das bei deren bzw. dessen Beendigung rückgesetzt wird,
und/oder eine dritten Schutzvorrichtung aufweisen kann zum Schützen eines Funktionsaufrufs vor Unterbrechung, wobei die dritte Schutzvorrichtung ein drittes Mutex oder ein drittes Semaphor aufweisen kann, das bei einer Ausführung einer anderen Funktion oder eines anderen funktionalen Blocks gesetzt wird und das bei deren bzw. dessen Beendigung rückgesetzt wird.

22. Betriebsverfahren nach einem der vorherigen Verfahrensansprüchen, bei dem ein oder mehrere Schutzverfahren, wie sie gemäß Anspruch 21 implementiert sein können, verwendet werden.
